# EUROPEAN PATENT SPECIFICATION

(11) **EP 2 701 153 B1**
(45) Date of publication and mention of the grant of the patent: **01.05.2019**
(21) Application number: 13180317.3
(22) Date of filing: 14.08.2013
(51) Int. Cl.: G11B 27/34, G06F 3/0488, G06F 3/0484, G06F 3/0486, G11B 27/034

(54) **Electronic device for merging and sharing images and method thereof**
Elektronische Vorrichtung zur Zusammenführung und gemeinsamen Nutzung von Bildern und Verfahren dafür
Dispositif électronique permettant de fusionner et de partager des images et procédé associé

(30) Priority: 23.08.2012 KR 20120092658
(43) Date of publication of application: 26.02.2014
(73) Proprietor: Samsung Electronics Co., Ltd., Gyeonggi-do 443-742 (KR)
(72) Inventor: Kim, Geon-Soo, Gyeonggi-do (KR)
(74) Representative: Nederlandsch Octrooibureau

(56) References cited:
- EP-A2- 2 172 837
- US-A1- 2008 313 568
- US-A1- 2009 228 820
- US-A1- 2010 058 182
- US-A1- 2011 087 981
- Anonymous: "PhotoShake Download, Online App Reviews", , 1 October 2010 (2010-10-01), XP055095884, Retrieved from the Internet: URL:http://www.appsmenow.com/app_page/3909 -PhotoShake [retrieved on 2014-01-10]
- Anonymous: "PhotoShake! Pro apk - APKTOP", , 8 August 2012 (2012-08-08), XP055095883, Retrieved from the Internet: URL:http://www.gapktop.com/tag/photoshake- pro-apk [retrieved on 2014-01-10]
- Anonymous: "Photo Wall Pro - Collage App for iPad - iOS Store Top Apps | App Annie", , 28 June 2012 (2012-06-28), XP055095849, Retrieved from the Internet: URL:http://www.appannie.com/apps/ios/app/p hoto-wall-pro-collage-app-for-ipad/ [retrieved on 2014-01-10]

## Description

### BACKGROUND OF THE INVENTION

### 1. Field of the Invention:

The present invention relates to an electronic device for merging and sharing images and a method thereof. More particularly, the present invention relates to a method for dragging images to be merged to a set region, locating them within a set distance, and merging the images with ease.

### 2. Description of the Related Art:

As functions of electronic devices have been developed, the reality is that functions provided from the electronic devices have been increasing. More particularly, because each of the electronic devices provides high-quality images, a user may generate images using the electronic device itself without having to use a separate equipment, such as a digital camera.

However, because an electronic device of the related art does not provide a basic tool for merging images stored therein, there is an inconvenience in that the user must download an additional application. There is a problem in that the user must execute a corresponding application and select images to be shared separately and manually to share images whose editing is completed with a user who uses another electronic device. For example, because the user must execute an application to be used and select images to be shared to share images stored therein, additional interaction is generated.

Therefore, a need exists for a method of easily merging images stored in the electronic device without an additional application. In addition, it is urgent to provide a method of editing merged images and easily interworking with a stored application without an additional interaction of the user.

The above information is presented as background information only to assist with an understanding of the present disclosure. No determination has been made, and no assertion is made, as to whether any of the above might be applicable as prior art with regard to the present invention.

The published patent application US 2010/058182 A1, JUNG JOO-YOUNG [KR], 4 March 2010, shows various kinds of touch-input to specify contents pieces to be merged: dragging one content piece to overlap another content piece, so that to combine them; dragging several contents pieces one-by-one to overlap another first content piece, so that to combine the plurality of contents pieces; dragging several pieces of content, simultaneously, to overlap a first one, so that to combine the plurality of contents pieces; drawing a closed free line around a region containing a plurality of contents pieces inside, so that to combine the encircled content pieces; and dragging sequentially through a plurality of contents pieces, so that to combine the plurality of contents pieces.

### SUMMARY OF THE INVENTION

Aspects of the present invention are to address at least the above-mentioned problems and/or disadvantages and to provide at least the advantages described below. Accordingly, an aspect of the present invention is to provide an apparatus and a method for dragging images to be merged to a set region, locating them within a set distance, and merging the images with ease.

Another aspect of the present invention is to provide an apparatus and a method for dragging a dividing line, an edge, and the like, among merged images and editing the merged images.

Another aspect of the present invention is to provide an apparatus and a method for automatically interworking with a set application and easily sharing the corresponding image by only an operation for flicking a merged and edited image in a certain direction.

In accordance with an aspect of the present invention, an operation method of an electronic device is provided. The operation method includes detecting that at least two or more touch-input images are dragged to a set region and merging the images when they are located within a set distance.

In accordance with another aspect of the present invention, an electronic device is provided. The electronic device includes a processor unit for detecting that at least two or more touch-input images are dragged to a set region and for merging the images when they are located within a set distance and a memory for storing signals controlled by the processor unit.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIGS. 1A through 1D illustrate a process of merging at least two or more photos according to an exemplary embodiment of the present invention;
FIGS. 2A through 2C illustrate a process of touching a dividing line between images and editing a merged image according to an exemplary embodiment of the present invention;
FIGS. 3A through 3C illustrate a process of touching a dividing line between images and editing a merged image according to an exemplary embodiment of the present invention;
FIGS. 4A through 4D illustrate a process of touching a dividing line between images and editing a merged image according to an exemplary embodiment of the present invention;
FIGS. 5A through 5C illustrate a process of enlarging and reducing a merged image according to an exemplary embodiment of the present invention;
FIGS. 6A through 6C illustrate a process of receiving a touch input of each of certain regions of at least two or more images partitioned in a merged image by dividing lines and editing the merged image according to an exemplary embodiment of the present invention;
FIGS. 7A through 7C illustrate a process of receiving a touch input of a certain portion on an edge of a merged image and editing the merged image according to an exemplary embodiment of the present invention;
FIG. 8 illustrate a process of sharing a merged image according to an exemplary embodiment of the present invention;
FIG. 9 is a flowchart illustrating an operation process of an electronic device according to an exemplary embodiment of the present invention;
FIG. 10 is a block diagram illustrating a configuration of an electronic device according to an exemplary embodiment of the present invention; and
FIGS. 11A and 11B illustrate a process of sharing a merged image according to an exemplary embodiment of the present invention.

Throughout the drawings, like reference numerals will be understood to refer to like parts, components, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims. It includes various specific details to assist in that understanding but these are to be regarded as merely exemplary. Accordingly, those of ordinary skill in the art will recognize that various changes and modifications of the embodiments described herein can be made. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

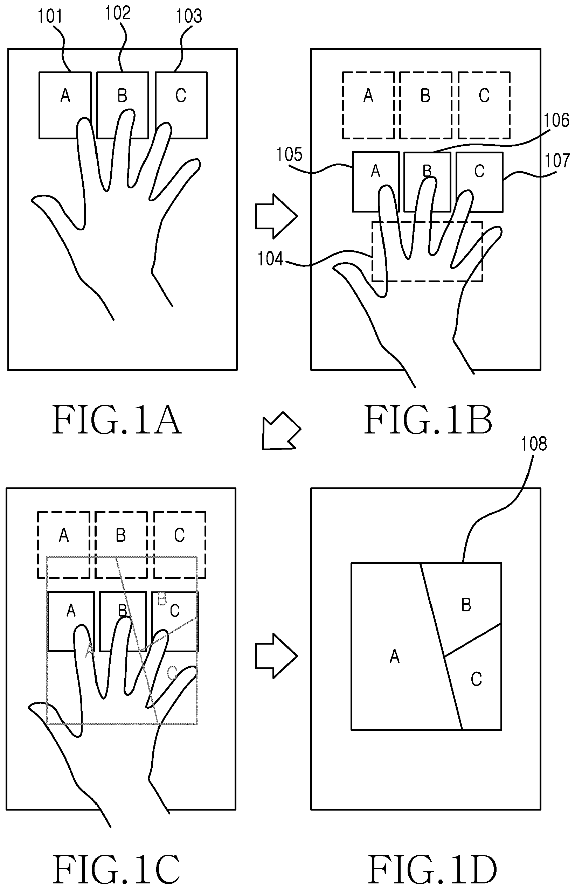

FIGS. 1A through 1D illustrate a process of merging at least two or more photos according to an exemplary embodiment of the present invention.

Referring to FIG. 1A, illustrated is a process of allowing a user to select at least two or more images among a plurality of displayed images according to an exemplary embodiment of the present invention.

In an exemplary implementation, an electronic device may allow the user to select at least two or more images among a plurality of images displayed on a touch screen. More specifically, the electronic device may allow the user to select a certain file which stores images, display a plurality of the stored images on a touch screen, and allow the user to select at least two or more images. For example, it is assumed that 10 images are stored in a gallery of the electronic device and 3 images 101 to 103 among them are selected from the user. For example, in the above-described assumption, the electronic device allows the user to select the gallery which stores the 10 images and allows him or her to select the 3 images 101 to 103 to be merged among the stored 10 images. Allowing the user to select the 3 images 101 to 103 among the 10 images, the electronic device may receive a touch input of the selected 3 images 101 to 103 simultaneously or successively. More specifically, the electronic device may receive a touch input of all of the images selected simultaneously or successively by the user. As shown in FIG. 1A, the electronic device may receive a touch input of the images 101 to 103 selected simultaneously or one by one successively by the user with his or her fingers.

Referring to FIGS. 1B and 1C, illustrated is a process of detecting that at least two or more touch-input images are being dragged to a set region according to an exemplary embodiment of the present invention.

In an exemplary implementation, the electronic device may detect that the at least two or more touch-input images are being dragged to the set region. More specifically, the electronic device may receive a touch input of the at least two or more images selected by the user simultaneously or one by one successively and detect that all of the touch-input images are dragged to a set region 104 simultaneously. For example, the electronic device detects that the touch-input selects the 3 images, which are dragged and moved to the center portion 104 of the touch screen. Herein, the more the at least two or more images 105 to 107 dragged and moved to the set region 104 in the touch-input state are dragged to the set region 104, the more they may be cleared by a set brightness. In addition, the more the at least two or more images 105 to 107 touch-input from the user are dragged to the set region 104, the more transparent the at least two or more touch-input images 101 to 103 are by a set brightness. For example, as shown in FIGS. 1B and 1C, the more the 3 images 105 to 107 dragged to the set region 104 in the touch-input state are moved to the set region 104, the more they may be cleared by the set brightness and the more transparent the touch-input images 101 to 103 may be by the set brightness. For example, the more the touch-input images 105 to 107 are dragged to the set region 104, the more they are more cleared and displayed by the set brightness. Accordingly, the user may verify that the current touch-input images are moved to the set region 104. In addition, in an exemplary embodiment of the present invention, the electronic device may verify that the touch input of the at least two or more touch-input images has ended and verify that the images which are being dragged to the set region are moved to the touch-input positions. More specifically, it is determined that the touch input of the images 105 to 107 which are being dragged to the set region 104 in the touch-input state is midway, the electronic device may verify that the images 105 to 107 which are being dragged to the set region are moved to the touch-input positions of the images 101 to 103. For example, if the touch input of the at least two or more images 105 to 107 which are being moved to the set region 104 in the touch-input state has ended while the two or more images 105 to 107 are dragged, the electronic device may verify that the dragged images 105 to 107 are moved to the touch-input positions of the images 101 to 103. For example, the user may end the touch input of any one or all of images midway while moving the at least two or more touch-input images 105 to 107 to the set region 104 and move the dragged images 105 to 107 to the touch-input positions of the images 101 to 103.

Referring to FIG. 1D, illustrated is a process of merging images into a set type according to a number of the images according to an exemplary embodiment of the present invention.

Referring to FIG. 1D, the electronic device may merge at least two or more images which are being dragged to a set region in a touch-input state into a set type 108 according to the number of the images. More specifically, if at least two or more images which are being dragged to a set region are located within a set distance, the electronic device may merge the at least two or more images dragged to the set region.

For example, assuming that a type shown in FIG. 1D is a basic type when 3 images are merged, the electronic device may merge the 3 images into the type 108 shown in FIG. 1D. For example, because an electronic device of the related art does not provide a basic tool for merging images stored therein, a user would need to download an additional application and merge at least two or more desired images. However, the electronic device according to an exemplary embodiment of the present invention has an advantage in that the user may drag images to be merged to a set region, locate them within a set distance, and merge the images easily.

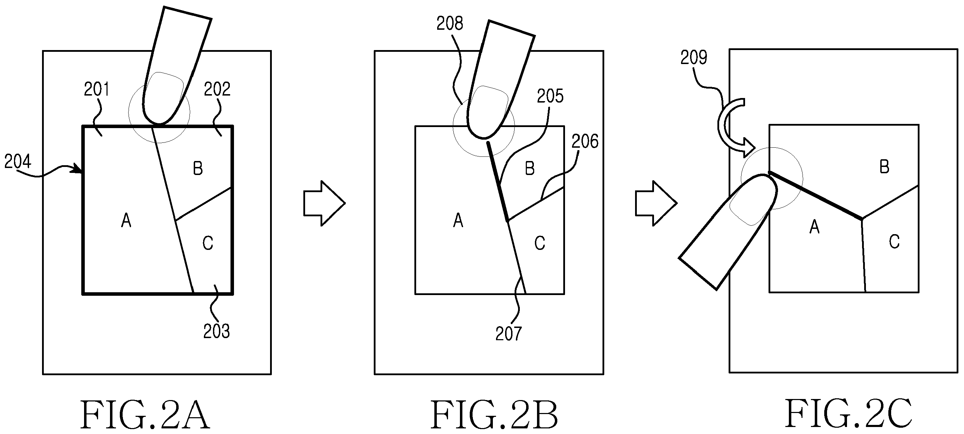

FIGS. 2A through 2C illustrate a process of touching a dividing line between images and editing a merged image according to an exemplary embodiment of the present invention.

In an exemplary implementation, after at least two or more images are merged, an electronic device may receive a touch input of a dividing line between the merged images and verify that the merged image is edited. More specifically, the electronic device may receive a touch input of an end portion of any one of dividing lines among images partitioned in the merged image, verify that the touch-input end portion of the dividing line is dragged in a certain direction, and verify that the touch-input dividing line is moved as the end portion of the dividing line is dragged in the certain direction. Hereinafter, after 3 images 201 to 203 are merged, it is assumed that the electronic device receives a touch input of any one of end portions of the 3 dividing lines displayed on the merged image 204.

Referring to FIG. 2A, after merging the 3 images 201 to 203, the electronic device is changed to an editing mode. More specifically, when the 3 images 201 to 203 are merged, the electronic device merges the 3 merged images 201 to 203 into a set basic type 204 and displays the basic type 204 on a touch screen. For example, as shown in FIG. 2A, when the 3 images 201 to 203 are merged, the electronic device merges the 3 images into the basic mergence type 204 according to an exemplary embodiment of the present invention. The electronic device verifies a touch input of an end 208 of any one 205 of 3 dividing lines 205 to 207 among 3 images partitioned in the merged image. For example, the electronic device may receive the touch input of the end portion 208 of the dividing line 205 between an A image and a B image from the user.

Referring to FIG. 2B, the electronic device may display the entire dividing line 205 corresponding to the touch-input to be distinguished from the other dividing lines 206 and 207. For example, the user may verify that a dividing line selected by him or her is displayed to be easily distinguished from the other dividing lines at a glance. Receiving the touch input of the end portion of the dividing line between the A image and the B image, the electronic device may verify that the touch-input end portion of the dividing line is dragged in a certain direction and verify that the touch-input dividing line is moved as the end portion of the dividing line is dragged in the certain direction.

Referring to FIG. 2C, for example, if it is verified that a touch region is moved in a counterclockwise direction 209 in a state where the touch input of the end portion of the dividing line between the A image and the B image is received, the electronic device moves the touch-input end portion of the corresponding dividing line simultaneously. For example, if the touch region is dragged in a certain direction, the electronic device also moves the end portion of the corresponding dividing line and the touch region simultaneously and moves the entire selected dividing line. Accordingly, the electronic device may easily merge images through a touch-input from the user, and may also easily edit images by receiving the touch input of the end portion of the dividing line partitioned between the merged images and conveniently moving the corresponding dividing line.

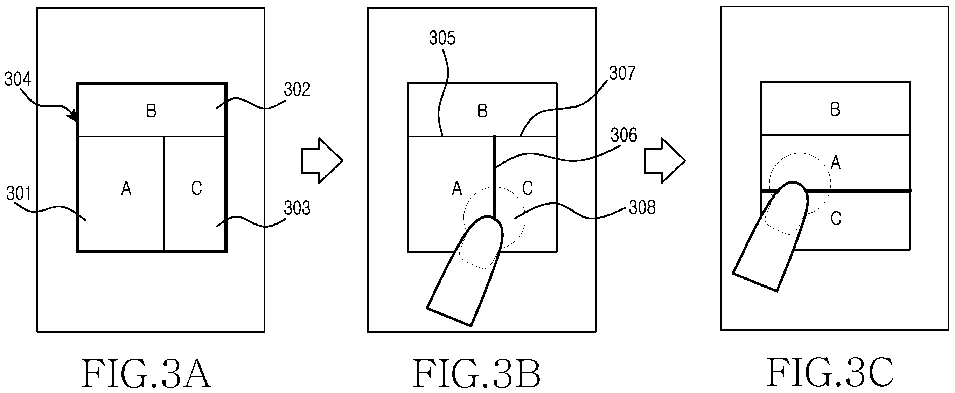

FIGS. 3A through 3C illustrate a process of touching a dividing line between images and editing a merged image according to an exemplary embodiment of the present invention.

Referring to FIG. 3A, after at least two or more images are merged, an electronic device may receive a touch input of a dividing line between the merged images and verify that the merged images are edited. More specifically, the electronic device may receive a touch input of a middle portion of any one of dividing lines among images partitioned in the merged image, verify that a touch region is rotated in a certain direction, and verify that a dividing line is moved in a direction where the touch region is rotated. Hereinafter, it is assumed that the electronic device receives a touch input of any one of middle portions of 3 dividing lines displayed on a merged image 304 after 3 images 301 to 303 are merged.

As shown in FIG. 3A, after merging the 3 images 301 to 303, the electronic device is changed to an additional editing mode. More specifically, when the 3 images 301 to 303 are merged, the electronic device merges the 3 merged images 301 to 303 into a set basic type 304 and displays the basic type 304 on a touch screen. For example, as shown in FIG. 3A, when the 3 images 301 to 303 are merged, the electronic device merges the 3 images into the basic mergence type 304. The electronic device verifies a touch input of a middle portion 308 of any one 306 of 3 dividing lines 305 to 307 among 3 images partitioned in the merged image. For example, the electronic device may receive the touch input of the middle portion 308 of the dividing line 306 between an A image and a C image from the user.

Referring to FIG. 3B, the electronic device may display the touch-input corresponding dividing line 306 to be distinguished from the other dividing lines 305 and 307. For example, the user may verify that a dividing line selected by him or her is displayed to be easily distinguished from the other dividing lines at a glance. Receiving the touch input of the middle portion 308 of the dividing line 306 between the A image and the C image, the electronic device may verify that the touch-input region is rotated in a direction and verify that a dividing line is moved in a direction where the touch region is rotated. For example, if it is verified that the touch region is moved in a clockwise direction in a state where the touch input of the middle portion 308 of the dividing line 306 between the A image and the C image is received, the electronic device also moves the touch-input corresponding dividing line 306 simultaneously. For example, if it is verified that the touch region is moved in the certain direction, the electronic device moves the corresponding dividing line in the moved direction.

Referring to FIG. 3C, the electronic device may verify that the touch region 308 is rotated in the clockwise direction and rotate the touch-input dividing line 306 in the clockwise direction. Accordingly, the electronic device may merge images touch-input from the user easily, and may also edit images easily by receiving the touch input of the middle portion of the dividing line partitioned between merged images and conveniently moving the corresponding dividing line.

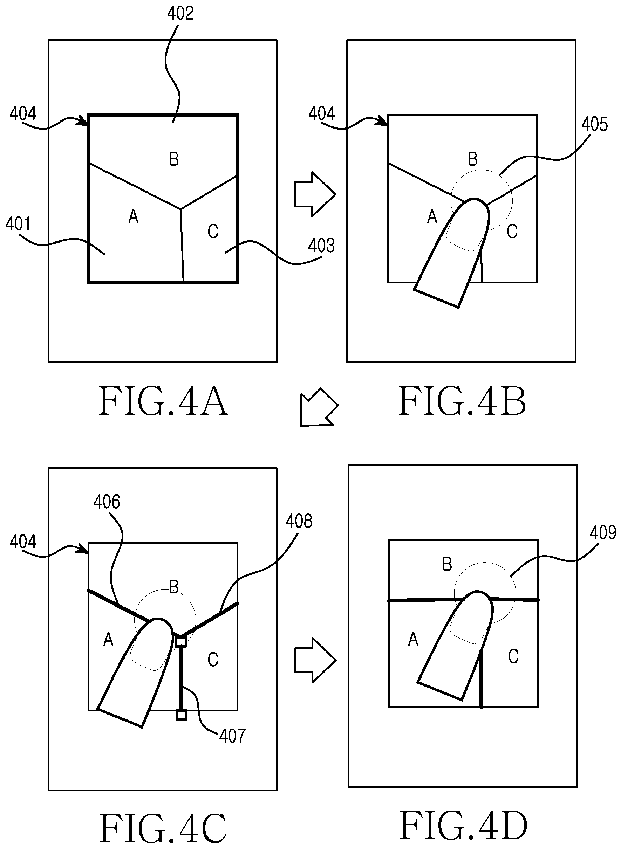

FIGS. 4A through 4D illustrate a process of touching a dividing line between images and editing a merged image according to an exemplary embodiment of the present invention.

In an exemplary implementation, after at least 3 or more images are merged, an electronic device may receive a touch input of an intersection point of dividing lines among the merged images and verify that the merged images are edited. More specifically, the electronic device may receive the touch input of the intersection point of the dividing lines among the merged images, verify that the touch-input intersection point is dragged in a certain direction, and verify that the dividing lines among the images are moved as the intersection point is dragged in the certain direction. Hereinafter, it is assumed that the electronic device receives a touch input of an intersection point of 3 dividing lines displayed on a merged image 404 after 3 images 401 to 403 are merged.

Referring to FIG. 4A, after merging the 3 images 401 to 403, the electronic device is changed to an editing mode. More specifically, when the 3 images 401 to 403 are merged, the electronic device merges the 3 merged images 401 to 403 into a set basic type 404 and displays the basic type 404 on a touch screen. For example, as shown in FIG. 4A, when the 3 images 401 to 403 are merged, the electronic device merges the 3 images into the basic mergence type 404 according to an exemplary embodiment of the present invention.

Referring to FIG. 4B, the electronic device verifies a touch input of an intersection point 405 among 3 images partitioned in the merged image. For example, the electronic device may receive the touch input of the intersection point 405 of the dividing lines among an A image, a B image, and a C image from the user.

Referring to FIG. 4C, the electronic device may display all dividing lines 406 to 408 to be distinguished from dividing lines before being selected to verify the user that all the dividing lines 406 to 408 connected with the touch-input intersection point 405 are selected. Receiving the touch input of the intersection point among the A image, the B image, and the C image, the electronic device may verify that the touch-input intersection point is dragged in a certain direction and verify that the dividing lines among the images are moved as the intersection point is dragged in the certain direction. For example, if it is verified that the intersection point is dragged to the northeast based on the user in a state where the touch input of the intersection point among the A image, the B image, and the C image is received, the electronic device also moves the touch-input corresponding intersection point 409 simultaneously. For example, if the electronic device receives the touch input of the intersection point of the dividing lines among the images and verifies that the intersection point is dragged in the certain direction, it may also move the corresponding intersection point and adjust all the dividing lines again.

Referring to FIG. 4D, the electronic device may verify that a touch region, namely, the intersection point 409 is dragged from the center to the northeast and adjust all the dividing lines 406 to 408. Accordingly, the electronic device may merge images touch-input from the user easily, and may also edit images easily by receiving the touch input of the intersection point of the dividing lines partitioned in merged images and conveniently moving all the dividing lines.

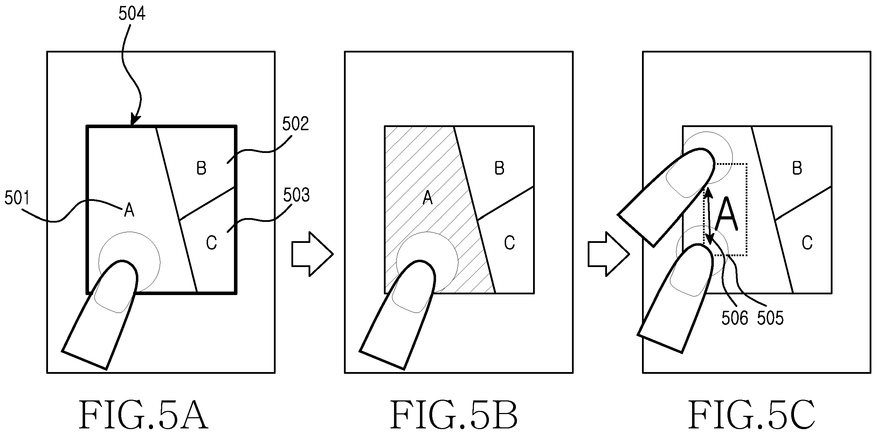

FIGS. 5A through 5C illustrate a process of enlarging and reducing a merged image according to an exemplary embodiment of the present invention.

In an exemplary implementation, an electronic device merges at least two or more images, touches. If a touch input of a certain region of any one of the merged images is received, the electronic device may enlarge or reduce the touch-input image. More specifically, the electronic device may receive a touch input for enlarging a certain region of any one of the at least two or more merged images or receives a touch input for reducing it, and may enlarge or reduce the corresponding image. Hereinafter, it is assumed that the electronic device merges 3 images 501 to 503 and receives a touch input for enlarging any one of the 3 images displayed on the merged image 504.

Referring to FIG. 5A, after merging the 3 images 501 to 503, the electronic device is changed to an editing mode. More specifically, when the 3 images 501 to 503 are merged, the electronic device merges the 3 merged images 501 to 503 into a set basic type 504 and displays the basic type 504 on a touch screen. For example, as shown in FIG. 5A, when the 3 images 501 to 503 are merged, the electronic device merges the 3 images into the basic mergence type 504. The electronic device may receive a touch input for enlarging any one of the 3 images 501 to 503 displayed on the merged image 504. For example, the electronic device may receive a touch input of a certain region of the A image 501 among the merged A to C images 501 to 503.

Referring to FIG. 5B, the electronic device may display the A image 501 to be distinguished from the other images 502 and 503 to verify the user that the A image 501 is selected. Displaying the A image 501 to be distinguished from the other images 502 and 503, the electronic device may receive a touch input for enlarging the A image 501.

Referring to FIG. 5C, for example, the electronic device may receive 2 touch regions 505 and 506 on the A image, receive a touch input such that the 2 touch regions 505 and 506 are distant from each other, and enlarge an image of the corresponding portion. FIG. 5C illustrates an example of enlarging the selected image. However, it is obvious that the electronic device may receive a touch input such that two touch regions are close to each other and reduce an image of a corresponding portion. Accordingly, the electronic device may merge images touch-input from the user easily, and may also enlarge or reduce only a corresponding image by receiving the touch input for enlarging or reducing a certain region of any one of merged images.

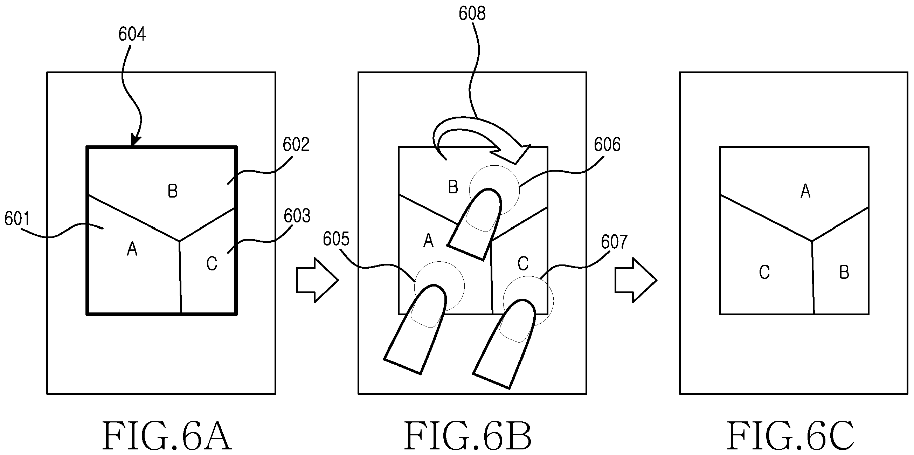

FIGS. 6A through 6C illustrate a process of receiving a touch input of each of certain regions of at least two or more images partitioned in a merged image by dividing lines and editing the merged image according to an exemplary embodiment of the present invention.

In an exemplary implementation, an electronic device may merge at least two or more images, receive a touch input of each of certain regions of at least two or more images partitioned in the merged image, and verify that the merged image is edited. More specifically, the electronic device may verify that the touch-input region is rotated in a clockwise or counterclockwise direction in a state where it receives the touch input of each of the certain regions of the at least two or more images and verify that all of the at least two or more image are moved in the rotated direction. Hereinafter, it is assumed that the electronic device receives a touch input of 3 images 601 to 603 displayed on a merged image 604 after the 3 images 601 to 603 are merged.

Referring to FIG. 6A, after merging the 3 images 601 to 603, the electronic device is changed to an editing mode. More specifically, when the 3 images 601 to 603 are merged, the electronic device merges the 3 merged images 601 to 603 into a set basic type 604 and displays the basic type 604 on a touch screen. For example, as shown in FIG. 6A, when the 3 images 601 to 603 are merged, the electronic device merges the 3 images into the basic mergence type 604. The electronic device verifies that the touch-input images are rotated in a clockwise or counterclockwise direction in a state where it receives the touch input of each of certain regions 605 to 607 of the 3 images partitioned in the merged image.

Referring to FIG. 6B, for example, the electronic device may verify that the touch-input images are rotated in the clockwise direction 608 in a state where it receives the touch input of each of the certain regions 605 to 607 of the 3 images. If it is determined that the rotation of the images rotated in the clockwise or counterclockwise direction has ended, the electronic device displays newly edited images in the order of images when the rotation has ended.

Referring to FIG. 6C, when the touch-input 3 images are rotated about 90 degrees in the clockwise direction in a state where the electronic device receives the touch input of the 3 images, the electronic device may display newly edited images which are rotated 90 degrees in the order of the A to C images which are merged for the first time. Accordingly, the electronic device may merge images touch-input from the user easily, and may provide an easy and convenient editing function to the user by displaying newly edited images when it is verified that touch-input images are rotated in the clockwise or counterclockwise direction in the state where the electronic device receives the touch input of certain regions of merged images.

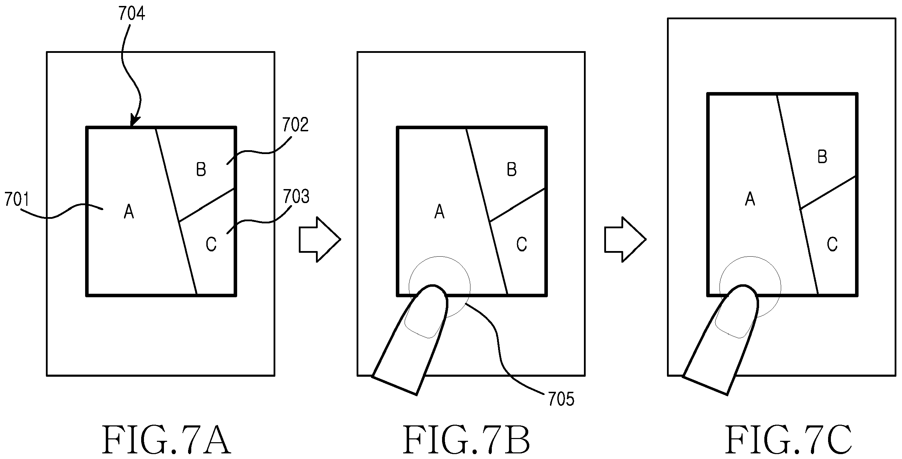

FIGS. 7A through 7C illustrate a process of receiving a touch input of a certain portion on an edge of a merged image and editing the merged image according to an exemplary embodiment of the present invention.

In an exemplary implementation, an electronic device may receive a touch input of a certain portion on an edge of a merged image, verify that the touch-input edge portion is dragged in a certain direction, and verify that a size of the entire image is adjusted as the edge portion is dragged in the certain direction. More specifically, the electronic device may verify that the edge portion is dragged down or up in a state where the electronic device receives the touch input of the certain portion on the edge of the merged image and verify that a size of the entire merged image is lengthened or shortened. Hereinafter, it is assumed that the electronic device receives a touch input of a certain portion on an edge of a merged image 704 after 3 images 701 to 703 are merged.

Referring to FIG. 7A, after merging the 3 images 701 to 703, the electronic device is changed to an editing mode. More specifically, when the 3 images 701 to 703 are merged, the electronic device merges the 3 merged images 701 to 703 into a set basic type 704 and displays the basic type 704 on a touch screen. For example, as shown in FIG. 7A, when the 3 images 701 to 703 are merged, the electronic device merges the 3 images into the basic mergence type 704. The electronic device may verify that the edge portion is dragged down or up in a state where the electronic device receives the touch input of the certain portion on the edge of the merged image and verify that a size of the entire merged image is lengthened or shortened.

Referring to FIG. 7B, for example, the electronic device may verify that a touch region is dragged down in a state where it receives a touch input of an edge portion 705 located under an A image on an edge portion of the merged image. The electronic device displays an image in which the entire merged image is lengthened down.

Referring to FIG. 7C, the electronic device may display a newly edited image to lengthen the entire merged image down. Accordingly, the electronic device may easily merge images touch-input from the user, and may provide an easy and convenient editing function to the user by verifying a touch region is dragged down or up in a state where the electronic device receives the touch input of the certain portion on an edge of the merged image and displaying a new edited image in which the entire merged image is lengthened or shortened.

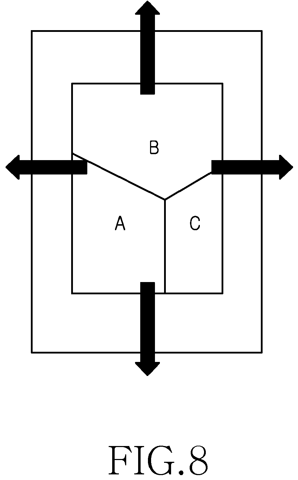

FIG. 8 illustrates a process of sharing a merged image according to an exemplary embodiment of the present invention.

Referring to FIG. 8, an electronic device provides a method of easily sharing an image whose mergence or editing is completed. More specifically, if the electronic device receives a touch input of the image whose mergence or editing is completed at a set time and detects that the image is flicked in a set direction, it may connect to an application set according to a flicked direction and upload the merged image. For example, if the electronic device receives a touch input of an image to be shared at a set time and detects that the image is flicked in a set direction, it may interwork with each application according to the set direction and upload the corresponding image easily. In addition, the electronic device may divide the image whose mergence or editing is completed into images before being merged according to a set flick direction. Hereinafter, it is assumed that the electronic device is set to connect to a social network service when an image is flicked up and it is assumed that it is set to connect to a multimedia messaging service when an image is flicked to the right. It is assumed that the electronic device is set to connect to a conversation application when an image is flicked down and it is assumed that it is set to divide an image whose mergence or editing is completed into images before being merged when an image is flicked to the left.

In above-described assumption, if it is determined that the touch input of the certain region of the image whose mergence or editing is completed is received at the set time, the electronic device detects a direction in which an input means is flicked. If it is detected that the input means is flicked up, the electronic device may connect to a social network service and upload the corresponding image. In addition, if it is detected that the input means is flicked to the right, the electronic device connects to a multimedia messaging service and upload the corresponding image easily. In addition, if it is detected that the input means is flicked down, the electronic device may connect to a conversation application and upload the corresponding image. In addition, if it is detected that the input means is flicked to the left, the electronic device may divide the image whose mergence or editing is completed into images before being merged and verify that the divided images are moved to positions before being divided.

For example, an electronic device of the related art has a problem in that much interaction is generated to upload images using a certain application. For example, it is necessary for a user to perform a following process to upload images stored in the electronic device using a certain application. In an exemplary implementation, the user must a select specific file which stores images to be uploaded again in a state where he or she selects an application to be used. There is an inconvenience in that the user must pass through a process of selecting images to be uploaded among a plurality of images, a process of executing the corresponding application, and a process of uploading the selected images. However, if the electronic device receives the touch input of the image whose mergence or editing is completed at the set time and detects that the image is flicked in a set direction, there is an advantage in that it connects to an application set according to a flicked direction and uploads a merged image. In addition, an exemplary embodiment of the present invention is described, assuming that a flicked direction is set up, down, left, and right. However, it is obvious that a flicked direction is set to an upper or lower diagonal direction.

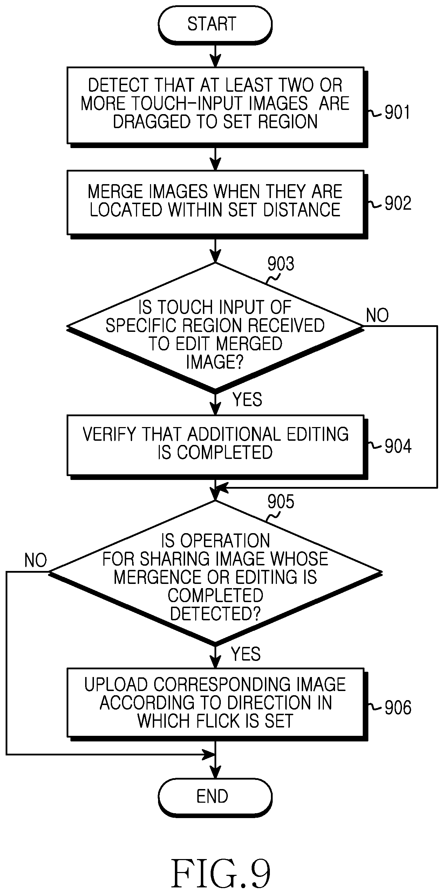

FIG. 9 is a flowchart illustrating an operation process of an electronic device according to an exemplary embodiment of the present invention.

Referring to FIG. 9, the electronic device detects that at least two or more touch-input images are dragged to a set region in step 901. More specifically, the electronic device may receive a touch input of at least two or more images selected by a user simultaneously or one by one successively with his or her fingers and detect that all the touch-input images are dragged to the set region simultaneously. For example, the electronic device may detect that 3 images touch-input from the user are simultaneously dragged and moved to a center portion of a touch screen. Herein, the more the at least two or more images dragged and moved to the set region in the state where the touch input is received from the user are dragged to the set region, the more they are cleared by a set brightness. In addition, the more the at least two or more images touch-input from the user are dragged to the set region, the more transparent the touch-input images are by a set brightness. The more 3 images dragged to the set region in the state where the touch input is received from the user are moved to the set region, the more they are cleared by a set brightness and the more transparent the touch-input images are by a set brightness. For example, the more the touch-input images are dragged to the set region, the more they are cleared and displayed by the set brightness. Accordingly, the user may verify that the current touch-input images are moved to the set region. In addition, in an exemplary embodiment of the present invention, the electronic device may verify that the touch input of the at least two or more touch-input images has ended and verify that the images dragged to the set region are moved to the touch-input positions. More specifically, if it is determined that the touch input of the images dragged to the set region in the touch-input state is midway, the electronic device may verify that the images which are being dragged to the set region are moved to the touch-input positions. For example, if the touch input of the at least two or more images which are being moved to the set region in the touch-input state has ended while they are being dragged, the electronic device may verify that the dragged images are moved to the touch-input positions. For example, the user may end the touch input of any one or all of the at least two or more images while the at least two or more images are moved to the set region and may move the dragged images to the touch-input positions.

If the images are located within a set distance, the electronic device merges the images in step 902. More specifically, if the touch input of the at least two or more images is received and the at least two or more images which are being dragged to the set region are located between a set distance, the electronic device may merge the at least two or more images dragged to the set region. For example, because an electronic device of the related art does not provide a basic tool for merging images stored therein, a user thereof may download an additional application and merge at least two or more desired images. However, if the user of the electronic device drags images to be merged to a set region and locates them within a set distance, there is an advantage in that the electronic device may merge the images easily.

After merging the images in step 902, the electronic device determines whether touch input of a specific region is received to edit the merged image in step 903. More specifically, when the two or more images are merged, the electronic device is changed to an editing mode. The electronic device may receive a touch input of a dividing line, an image, an edge of the merged image, and the like, from the user and edit the merged image. For example, after at least two or more images are merged, the electronic device may receive a touch input of a dividing line between the merged images and may verify that the merged images are edited. In addition, after at least two or more images are merged, the electronic device may receive a touch input of a dividing line between the merged images and may verify that the merged images are edited. In addition, after at least three or more images are merged, the electronic device may receive a touch input of an intersection point of dividing lines among the merged images and verify that the merged images are edited. In addition, the electronic device may merge at least two or more images, receive a touch input of a certain region of any one of the merged images, and enlarge or reduce the touch-input image. In addition, the electronic device may merge at least two or more images, receive a touch input of each of certain regions of the at least two or more images partitioned in the merged image by dividing lines, and verify that the merged images are edited. In addition, the electronic device may receive a touch input of a certain portion on an edge of a merged image, verify that the touch-input edge portion is dragged in a certain direction, and verify that a size of the entire image is adjusted as the edge portion is dragged in the certain direction.

The electronic device verifies that additional editing is completed in step 904. More specifically, as described above, the electronic device may receive a touch input of a dividing line, an image, an edge of the merged image, and the like, and verify that editing of the merged image is completed.

Upon verifying that the additional editing is completed, the electronic device determines whether to detect an operation for sharing an image whose mergence or editing is completed in step 905. More specifically, if the electronic device receives a touch input of the image whose mergence or editing is completed at a set time and detects that the image is flicked in a set direction, it may connect to an application set according to a flicked direction and upload the merged image. For example, if the electronic device receives a touch input of an image to be shared at the set time and detects that the image is flicked in the set direction, it may interwork with each application according to the set direction and upload the corresponding image easily.

If the electronic device detects the operation for sharing the image whose mergence or editing is completed, it uploads the corresponding image according to a direction in which flick is set in step 906. For example, it is assumed that the electronic device is set to connect to a social network service when an image is flicked up and it is assumed that it is set to connect to a multimedia messaging service when an image is flicked to the right. It is assumed that the electronic device is set to connect to a conversation application when an image is flicked down and it is assumed that it is set to divide an image whose mergence or editing is completed into images before being merged when an image is flicked to the left.

In above-described assumption, if it is determined that the touch input of the certain region of the image whose mergence or editing is completed is received at the set time, the electronic device detects a direction in which an input means is flicked. If it is detected that the input means is flicked up, the electronic device may connect to a social network service and upload the corresponding image. In addition, if it is detected that the input means is flicked to the right, the electronic device may connect to a multimedia messaging service and upload the corresponding image easily. In addition, if it is detected that the input means is flicked down, the electronic device may connect to a conversation application and upload the corresponding image. In addition, if it is detected that the input means is flicked to the left, the electronic device may divide the image whose mergence or editing is completed into images before being merged and verify that the divided images are moved to positions before being divided.

If it is determined that the touch input of the specific region is not received to edit the merged images in step 903, the electronic device determines whether to detect an operation for sharing the image whose mergence or editing is completed. In addition, it is determined that the operation for sharing the image whose mergence or editing is completed is not detected in step 905, it is obvious that the electronic device ends the algorithm of FIG. 9 immediately.

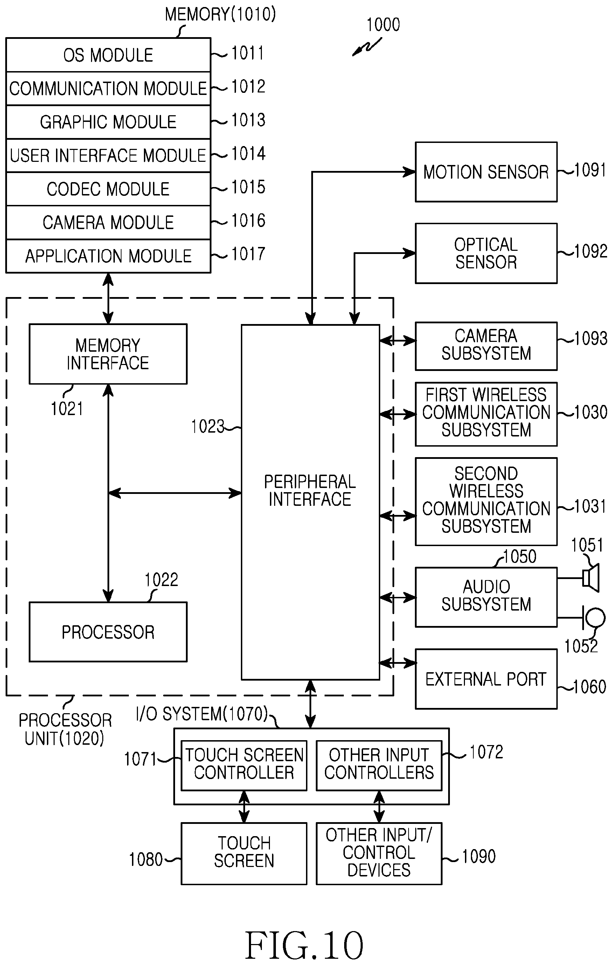

FIG. 10 is a block diagram illustrating a configuration of an electronic device according to an exemplary embodiment of the present invention.

Referring to FIG. 10, an electronic device 1000 may be a portable electronic device. The electronic device may be any one of apparatuses, such as a portable terminal, a mobile phone, a mobile pad, a media player, a tablet computer, a handheld computer, a Personal Digital Assistant (PDA), and the like. In addition, the electronic device may be a certain portable electronic device including a device in which two or more functions are combined among these apparatuses.

This electronic device 1000 includes a memory 1010, a processor unit 1020, a first wireless communication subsystem 1030, a second wireless communication subsystem 1031, an external port 1060, an audio subsystem 1050, a speaker 1051, a microphone 1052, an Input/Output (I/O) system 1070, a touch screen 1080, other input/control devices 1090, a motion sensor 1091, an optical sensor 1092, and a camera subsystem 1093. The memory 1010 and the external port 1060 may be a plurality of memories and external ports, respectively.

The processor unit 1020 may include a memory interface 1021, one or more processors 1022, and a peripheral interface 1023. In some cases, the whole processor unit 1020 is referred to as a processor. In accordance with an exemplary embodiment of the present invention, the processor unit 1020 detects that at least two or more touch-input images are dragged to a set region and merges the images when the images are located within a set distance. In addition, the processor unit 1020 verifies that a touch input of at least two or more selected images is received and performs a control operation, such that the more the at least two or more touch-input images are dragged to the set region, the more they are cleared by a set brightness. In addition, the processor unit 1020 performs a control operation, such that the more the at least two or more touch-input images are dragged to a set region, the more transparent the touch-input images are by a set brightness. In addition, the processor unit 1020 performs a control operation, such that the more the at least two or more touch-input images are dragged to the set region, the more the image are narrowed by a set distance. In addition, the processor unit 1020 determines whether at least two or more dragged images are located within a set distance, verifies whether touch input of at least two or more touch-input images has ended, and verifies that images which are being dragged to a set region are moved to the touch-input positions. In addition, the processor unit 1020 merges images into a set type according to the number of the images and edits the merged images. In addition, the processor unit 1020 verifies that a touch-input end portion of a dividing line is dragged in a certain direction and verifies that the touch-input dividing line is moved as the end portion of the dividing line is dragged in the certain direction. In addition, the processor unit 1020 verifies that a touch region is rotated in a certain direction and verifies that a dividing line is moved in the direction where the touch region is rotated. In addition, the processor unit 1020 verifies that a touch-input intersection point is dragged in a certain direction and verifies that all of dividing lines among images are moved as the intersection is dragged in the certain direction. In addition, the processor unit 1020 verifies that images are rotated in a clockwise or counterclockwise direction in a state where touch input of each of certain regions of at least two or more images is received and verifies that all of the at least two or more images are moved in the rotated direction. In addition, the processor unit 1020 verifies that an edge portion is dragged in a certain direction is received and verifies that a size of the entire image is adjusted as the edge portion is dragged in the certain direction. In addition, the processor unit 1020 verifies that a touch input of a certain region of a merged image is received at a set time, detects that the merged image is flicked in a certain direction, and connects to an application set according to a flicked direction among at least two or more applications. In addition, the processor unit 1020 verifies that a touch input of a certain region of a merged image is received at a set time, detects that the merged image is flicked in a certain direction, divides the merged image into images before being merged, and verifies that the divided images are moved to positions before being merged. In addition, the processor unit 1020 verifies that a touch input of a certain region of an edited image is received at a set time, detects that the edited image is flicked in a certain direction, and connects to an application set according to a flicked direction among at least two or more applications. In addition, the processor unit 1020 verifies that a touch input of a certain region of an edited image is received at a set time, detects that the edited image is flicked in a set direction, modifies the edited image into images before being edited, divides the modified images into images before being merged, and verifies that the divided images are moved to positions before being merged. In addition, the processor unit 1020 verifies that a touch input of a certain region of a merged image is received at a set time, verifies that an image merged in a direction of any one of guide images of at least two or more displayed applications is dragged, and connects to an application set according to the dragged direction. In addition, the processor unit 1020 verifies that a touch input of a certain region of a merged image is received at a set time, verifies that an image merged in a displayed guide image direction is dragged, divides the merged image into images being merged, and verifies that the divided images are moved to positions before being merged. In addition, the processor unit 1020 verifies that a touch input of a certain region of an edited image is received at a set time, verifies that an image edited in a direction of any one of guide images of at least two or more displayed applications is dragged, connects to an application set according to the dragged direction, and uploads the edited image using the connected application. In addition, the processor unit 1020 verifies that a touch input of a certain region of an edited image is received at a set time, verifies that the edited image is dragged in a displayed guide image direction, divides the edited image into images before being merged, and verifies that the divided images are moved to positions before being merged.

The processor 1022 executes several software programs and performs several functions for the electronic device 1000. In addition, the processor 1022 performs process and control for voice communication and data communication. Moreover, in addition to this normal function, the processor 1022 plays a role in executing a specific software module (instruction set) stored in the memory 1010 and performing several specific functions corresponding to the software module. For example, the processor 1022 interworks with the software modules stored in the memory 1010 and performs the method according to an exemplary embodiment of the present invention.

The processor 1022 may include one or more data processors, an image processor, a codec, or the like. The processor 1022 may separately include the data processors, the image processor, the codec, or the like. In addition, the processor 1022 may include several processors for performing different functions. The peripheral interface 1023 connects the I/O system 1070 of the electronic device 1000 and several peripheral devices to the processor 1022 and the memory 1010 (through the memory interface 1021).

A variety of components of the electronic device 1000 may be coupled by one or more communication buses (not written in reference numbers) or stream lines (not written in reference numbers).

The external port 1060 is used to connect a portable electronic device (not shown) to another electronic device directly or connect it to another electronic device indirectly through a network (e.g., the Internet, an intranet, a wireless Local Area Network (LAN), and the like). For example, the external port 1060 means, which is not limited to, a Universal Serial Bus (USB) port, a firewire port, and the like.

The motion sensor 1091 and the optical sensor 1092 may connect to the peripheral interface 1023 and may perform several functions. For example, the motion sensor 1091 and the optical sensor 1092 may connect to the peripheral interface 1023, may detect motion of the electronic device 1000, and may detect light from the outside. Furthermore, a position measurement system and other sensors, such as a temperature sensor, a bio-sensor, and the like, may connect to the peripheral interface 1023 and may perform related functions.

The camera subsystem 1093 may perform a camera function (i.e., an image capture function and video clip recording function).

The optical sensor 1092 may be a Charge Coupled Device (CCD) or a Complementary Metal-Oxide Semiconductor (CMOS) device.

A communication function is performed through the first and second wireless communication subsystems 1030 and 1031. Each of the first and second wireless communication subsystems 1030 and 1031 may include a radio frequency receiver and transceiver and/or a beam (e.g., an infrared ray) receiver and transceiver. The first communication subsystem 1030 and the second communication subsystem 1031 may be classified according to a communication network through which the electronic device 1000 communicates. For example, the communication network may be, but is not limited to, a Global System for Mobile communication (GSM) network, an Enhanced Data GSM Environment (EDGE) network, a Code Division Multiple Access (CDMA) network, a W-CDMA network, a Long Term Evolution (LTE) network, an Orthogonal Frequency Division Multiple Access (OFDMA) network, a Wireless Fidelity (Wi-Fi) network, a WiMax network, or/and a Bluetooth network. Each of the first and second communication subsystems 1030 and 1031 may include a communication subsystem designed to be operated through the communication network. The first and second wireless communication subsystems 1030 and 1031 may be combined and configured as one wireless communication subsystem.

The audio subsystem 1050 may connect to the speaker 1051 and the microphone 1052 and may be responsible for inputting and outputting an audio stream, such as a voice recognition function, a voice copy function, a digital recording function, and a phone call function. For example, the audio subsystem 1050 communicates with a user through the speaker 1051 and the microphone 1052. The audio subsystem 1050 receives a data stream through the peripheral interface 1023 of the processor unit 1020 and converts the received data stream into an electric stream. The converted electric stream is transmitted to the speaker 1051. The speaker 1051 converts the electric stream into a sound wave to which a user may listen and outputs the converted sound wave. The microphone 1052 converts a sound wave transmitted from the user or other sound sources into an electric stream. The audio subsystem 1050 receives the converted electric stream from the microphone 1052. The audio subsystem 1050 converts the received electric stream into an audio data stream and transmits the converted audio data stream to the peripheral interface 1023. The audio subsystem 1050 may include an attachable and detachable earphone, a headphone, a headset, or the like.

The I/O system 1070 may include a touch screen controller 1071 and/or other input controllers 1072. The touch screen controller 1071 may be coupled to the touch screen 1080. The touch screen 1080 and the touch screen controller 1071 may detect, but are not limited to, contact and motion or lack thereof using not only capacitive, resistive, infrared ray, and surface acoustic wave technologies for determining one or more contact points but also a certain multi-touch detecting technology including other proximity sensor arrangement or other elements. The other input controllers 1072 may be coupled to the other input/control devices 1090. The other input/control devices 1090 may be pointer devices, such as one or more buttons, a rocket switch, a thumb-wheel, a dial, a stick, and/or a stylus.

The touch screen 1080 provides an input/output interface between the electronic device 1000 and the user. For example, the touch screen 1080 transmits touch input of the user to the electronic device 1000. In addition, the touch screen 1080 is a medium for displaying output from the electronic device 1000 to the user. For example, the touch screen 1080 displays visual output to the user. This visual output has a text type, a graphic type, a video type, and a combined type of them.

The touch screen 1080 may be several displays. For example, the touch screen 1080 may be, but is not limited to, a Liquid Crystal Display (LCD), a Light Emitting Diode (LED), a Light emitting Polymer Display (LPD), an Organic Light Emitting Diode (OLED), an Active Matrix Organic Light Emitting Diode (AMOLED), a Flexible LED (FLED), or the like. The touch screen 1080 allows the user to select at least two or more images of a plurality of displayed images, receives a touch input of an end portion of any one of dividing lines among images partitioned in a merged image, and receives a touch input of any one of dividing lines among images partitioned in the merged image. In addition, when at least three or more images are merged, the touch screen 1080 receives a touch input of an intersection point of dividing lines among the images, receives a touch input of each of certain regions of at least two or more images partitioned in a merged image by dividing lines, and receives a touch input of a certain portion on an edge of the merged image. In addition, the touch screen 1080 displays guide images of at least two or more applications, capable of automatically interworking with a merged image, in a set direction and displays a guide image, capable of dividing the merged image into images before being merged, in a set direction. In addition, the touch screen 1080 displays guide images of at least two or more applications, capable of automatically interworking with an edited image, in a set direction and displays a guide image, capable of dividing the edited image into images before being edited, in a set direction.

The memory 1010 may be coupled to the memory interface 1021. The memory 1010 may include a high-speed Random Access Memory (RAM), such as one or more magnetic storages, a non-volatile memory, one or more optical storages, and/or a flash memory (e.g., a NAND flash memory or a NOR flash memory).

The memory 1010 stores software components. The software components include an Operating System (OS) module 1011, a communication module 1012, a graphic module 1013, a user interface module 1014, a CODEC module 1015, a camera module 1016, one or more application modules 1017, and the like. In addition, the modules which are the software components may be expressed in a set of instructions. Accordingly, the modules are expressed in an instruction set. In addition, the modules are expressed in programs.

The OS module 1011 (e.g., an embedded OS, such as Windows, Linux, Darwin, RTXC, UNIX, OS X, or VxWorks) includes several software components for controlling a general system operation. For example, control of this general system operation means memory management and control, storage hardware (device) control and management, power control and management, and the like. This OS module 1011 also performs a function for smoothly communicating between several hardware components (devices) and software components (modules).

The communication module 1012 may communicate with other electronic devices, such as a computer, a server, and/or a portable terminal through the first and second wireless communication subsystems 1030 and 1031 or the external port 1060. The communication module 1012 uploads a merged image using a connected application and uploads an edited image using the connected application.

The graphic module 1013 includes several software components for providing and displaying graphics on the touch screen 1080. The term "graphics" means that texts, web pages, icons, digital images, videos, animations, and the like, are included. The touch screen 1080 displays a message about whether to set a smart rotation function and allows the user to select a certain region included in the message.

The user interface module 1014 includes several software components related to a user interface. The user interface module 1014 includes contents about whether a state of a user interface is changed to any state, whether a state of a user interface is changed in any condition, and the like.

The CODEC module 1015 may include software components related to encoding and decoding of video files. The CODEC module 1015 may include a video stream module, such as a Motion Pictures Expert Group (MPEG) module and/or an H204 module. In addition, the CODEC module 1015 may include a code module for several audio files, such as AAA files, AMR files, and WMA files. In addition, the CODEC module 1015 includes an instruction set corresponding to an exemplary embodiment of the present invention.

The camera module 1016 includes cameral-related software components capable of performing camera-related processes and functions.

The application module 1017 includes a browser function, an email function, an instant message function, a word processing function, a keyboard emulation function, an address book function, a touch list function, a widget function, a Digital Right Management (DRM) function, a voice recognition function, a voice copy function, a position determining function, a location based service function, and the like.

A variety of functions of the electronic device 800, which are described above or to be described later, may be executed by one or more streaming processing, hardware including an Application Specific Integrated Circuit (ASIC), software, and/or combination of them.

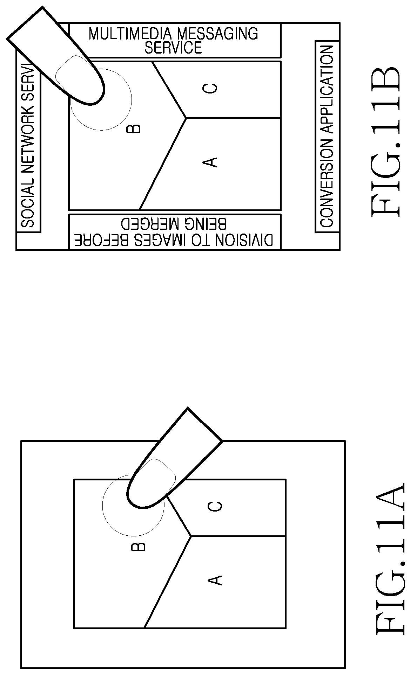

FIGS. 11A and 11B illustrate a process of sharing a merged image according to an exemplary embodiment of the present invention.

Referring to FIGS. 11A and 11B, an electronic device provides a method of easily sharing an image whose mergence or editing is completed. More specifically, as shown in FIG. 11A, if the electronic device receives a touch input of the image whose mergence or editing is completed at a set time and detects that the image is dragged in a set direction, it may connect to an application set according to the dragged direction and upload the merged image. For example, if the electronic device receives a touch input of an image to be shared at a set time and detects that the image is dragged in a set direction, it may interwork with each application in the set direction and upload the corresponding image easily. In addition, the electronic device may divide the image whose mergence or editing is completed into images before being merged. Hereinafter, as shown in FIG. 11B, it is assumed that the electronic device is set to connect to a social network service when an image is flicked up and it is assumed that it is set to connect to a multimedia messaging service when an image is flicked to the right. It is assumed that the electronic device is set to connect to a conversation application when an image is flicked down and it is assumed that it is set to divide an image whose mergence or editing is completed into images before being merged when an image is flicked to the left.

In above-described assumption, if it is determined that the touch input of the certain region of the image whose mergence or editing is completed is received at the set time, the electronic device displays guide images of at least two or more applications in a set direction. More specifically, if it is verified that the touch input of the certain region of the image whose mergence or editing is completed is received, the electronic device displays a guide image of each application or a guide image capable of being divided into images before being merged on an end portion of a set direction. In above-described assumption, if it is verified that the touch input of the certain region of the image whose mergence or editing is completed is received at the set time, the electronic device displays a guide image of a social network service on an upper portion of a touch screen and displays a guide image of a multimedia messenger service on a right portion of the touch screen. The electronic device displays a guide image of a conversation application on a lower portion of the touch screen and displays a guide image capable of being divided into images before being merged on a left portion of the touch screen.

If it is verified that the image whose mergence or editing is completed is dragged in any one guide image direction, the electronic device may connect to an application set according to a set direction and upload the merged image easily. For example, if it is verified that the image whose mergence or editing is completed is dragged to the right, the electronic device may link the corresponding image to a multimedia messaging service automatically.

For example, an electronic device of the related art has a problem in that much interaction is generated to upload images using a certain application. For example, it is necessary for the user to perform a following process to upload images stored in the electronic device using a certain application. In an exemplary implementation, the user must select a specific file which stores images to be uploaded in a state where he or she selects an application to be used. There is an inconvenience in that the user must pass through a process of selecting images to be uploaded among a plurality of images which are stored in the corresponding file, a process of executing the corresponding application, and a process of uploading the selected images. However, if the electronic device receives the touch input of the image whose mergence or editing is completed at the set time, it may display a guide image of each application or a guide image capable of being divided into images before being merged on an end portion of a set direction. If it is verified that the image whose mergence or editing is completed is dragged in any one guide image direction, there is an advantage in that the electronic device connects to an application set according to the dragged direction and uploads a merged image. In addition, an exemplary embodiment of the present invention is described, assuming that a dragged direction is set up, down, left, and right. Further, it is obvious that a dragged direction may be set to upper diagonal direction or lower diagonal direction.

An electronic device capable of merging and sharing images according to an exemplary embodiment of the present invention and a method thereof may drag images to be merged to a set region, locate the images within a set distance, and merge the images easily.

While the invention has been shown and described with reference to certain exemplary embodiments thereof, it will be understood by those skilled in the art that various changes in form and details may be made therein without departing from the scope of the invention as defined by the appended claims.

## Claims

1. A method of operating an electronic device, the method comprising:
detecting that at least two or more touch-input images are simultaneously dragged to a set region and that the images are located within a set distance to the region; and
merging the images when they are located within the set distance.

2. The method of claim 1, wherein the detecting that the at least two or more touch-input images are dragged to the set region comprises performing a control operation, such that the more the at least two or more touch-input images are dragged to the set region, the more they are cleared by a set brightness, the more transparent the touch-input images are by a set brightness and the more they are narrowed by a set distance.

3. The method of claim 1, further comprising:
verifying that a touch input of the at least two or more touch-input images has ended; and
verifying that the images dragged to the set region are moved to the touch-input positions.

4. The method of claim 1, further comprising:
receiving a touch input of an end portion of any one of dividing lines among the images partitioned in the merged image;
verifying that the touch-input end portion of the dividing line is dragged in a certain direction; and
verifying that the touch-input dividing line is moved as the end portion of the dividing line is dragged in the certain direction.

5. The method of claim 1, further comprising:
receiving a touch input of any one of dividing lines among images partitioned in the merged image;
verifying that the touch-input region is rotated in a certain direction; and
verifying that the dividing line is moved in a direction where the touch-input region is rotated.

6. The method of claim 1, further comprising:
receiving a touch input of an intersection point of dividing lines among images partitioned in images when at least three or more images are merged;
verifying that the touch-input intersection point is dragged in a certain direction; and
verifying that all of the dividing lines among the images are moved as the intersection point is dragged in the certain direction.

7. The method of claim 1, further comprising:
receiving a touch input of each of certain regions of at least two or more images partitioned in the merged image;
verifying that the images are rotated in a clockwise or counterclockwise direction in a state where the touch input of each of the certain regions among the at least two or more images is received; and
verifying that all of the at least two or more images are moved in the rotated direction.

8. The method of claim 1, further comprising:
receiving a touch input of a certain portion on an edge of the merged image;
verifying that the touch-input edge portion is dragged in a certain direction; and
verifying that a size of the entire image is adjusted as the edge portion is dragged in the certain direction.

9. The method of claim 1, further comprising:
verifying that a touch input of a certain region of the merged and edited image is received at a set time;
detecting that the merged and the edited image is flicked in a certain direction;
connecting to an application set according to the flicked direction among at least two or more applications; and
uploading the merged and the edited image using the connected application.

10. The method of claim 1, further comprising:
verifying that a touch input of a certain region of the merged image is received at a set time;
detecting that the merged image is flicked in a set direction;
dividing the merged image into images before being merged; and
verifying that the divided images are moved to positions before being merged.

11. The method of claim 1, further comprising:
verifying that a touch input of a certain region of the merged and edited image is received at a set time;
displaying guide images of at least two or more applications, capable of automatically interworking with the merged and the edited image, in a set direction;
verifying that the merged and the edited image is dragged in a direction of any one of the displayed guide images of the at least two or more applications;
connecting to an application set according to the dragged direction; and
uploading the merged and the edited image using the connected application.

12. The method of claim 1, further comprising:
verifying that a touch input of a certain region of the merged image is received at a set time;
displaying a guide image, capable of dividing the merged image into images before being merged, in a set direction;
verifying that the merged image is dragged in a direction of the displayed guide image;
dividing the merged image into images before being merged; and
verifying that the divided images are moved to positions before being merged.

13. The method of claim 1, further comprising:
verifying that a touch input of a certain region of edited image is received at a set time;
detecting that the edited image is flicked in a set direction;
modifying the edited image into images before being edited;
dividing the images modified before being edited into images before being merged; and
verifying that the divided images are moved to positions before being merged.

14. The method of claim 1, further comprising:
verifying that a touch input of a certain region of edited image is received at a set time;
displaying a guide image, capable of dividing the edited image into images before being edited, in a set direction;
verifying that the edited image is dragged in a direction of the displayed guide image;
dividing the edited image into images before being edited; and
verifying that the divided images are moved to positions before being merged.

15. An electronic device comprising a memory and a processor coupled to the memory and configured to perform the method of any of claim 1 to claim 14.

## Patentansprüche

1. Verfahren zum Betreiben einer elektronischen Vorrichtung, wobei das Verfahren umfasst:
Erkennen, dass mindestens zwei oder mehr durch Berührung eingegebene Bilder gleichzeitig in einen eingestellten Bereich gezogen werden und dass die Bilder innerhalb eines eingestellten Abstands zu dem Bereich angeordnet sind; und
Zusammenführen der Bilder, wenn sie sich innerhalb des eingestellten Abstands befinden.

2. Verfahren nach Anspruch 1, wobei das Erkennen, dass die mindestens zwei oder mehr durch Berührung eingegebene Bilder in den eingestellten Bereich gezogen werden, das Durchführen einer Steuerungsoperation umfasst, so dass je mehr als die mindestens zwei oder mehr durch Berührung eingegebene Bilder gezogen werden, desto mehr werden sie durch eine eingestellte Helligkeit entfernt, desto transparenter werden die durch Berührung eingegebenen Bilder durch eine eingestellte Helligkeit und desto stärker werden sie um einen eingestellten Abstand verkleinert.

3. Verfahren nach Anspruch 1, ferner umfassend:
Verifizieren, dass eine Berührungseingabe der mindestens zwei oder mehr durch Berührung eingegebene Bilder beendet ist, und
Verifizieren, ob die in den eingestellten Bereich gezogenen Bilder an die Berührungseingabepositionen verschoben werden.

4. Verfahren nach Anspruch 1, ferner umfassend:
Empfangen einer Berührungseingabe eines Endabschnitts einer der Trennlinien unter den Bildern, die in das zusammengeführte Bild unterteilt sind;
Verifizieren, dass der Berührungseingabe-Endabschnitt der Trennlinie in eine bestimmte Richtung gezogen wird; und
Verifizieren, dass die Berührungseingabe-Trennlinie bewegt wird, während der Endabschnitt der Trennlinie in die bestimmte Richtung gezogen wird.

5. Verfahren nach Anspruch 1, ferner umfassend:
Empfangen einer Berührungseingabe einer beliebigen Trennlinie zwischen Bildern, die in dem zusammengeführten Bild unterteilt sind;
Verifizieren, dass der Berührungseingabebereich in eine bestimmte Richtung gedreht wird; und
Verifizieren, dass die Trennlinie in eine Richtung bewegt wird, in der der Berührungseingabebereich gedreht wird.

6. Verfahren nach Anspruch 1, ferner umfassend:
Empfangen einer Berührungseingabe eines Schnittpunkts von Trennlinien zwischen Bildern, die in Bildern unterteilt sind, wenn mindestens drei oder mehr Bilder zusammengeführt werden;
Verifizieren, dass der Berührungseingabe-Schnittpunkt in eine bestimmte Richtung gezogen wird; und
Verifizieren, dass alle Trennlinien zwischen den Bildern verschoben werden, wenn der Schnittpunkt in die bestimmte Richtung gezogen wird.

7. Verfahren nach Anspruch 1, ferner umfassend:
Empfangen einer Berührungseingabe von jedem der bestimmten Bereiche von mindestens zwei oder mehr Bildern, die in dem zusammengeführten Bild unterteilt sind;
Verifizieren, dass die Bilder im Uhrzeigersinn oder gegen den Uhrzeigersinn in einem Zustand gedreht werden, in dem die Berührungseingabe von jedem der bestimmten Bereiche unter den mindestens zwei oder mehr Bildern empfangen wird; und
Verifizieren, dass alle der mindestens zwei oder mehr Bilder in die Drehrichtung bewegt werden.

8. Verfahren nach Anspruch 1, ferner umfassend:
Empfangen einer Berührungseingabe eines bestimmten Abschnitts an einer Kante des zusammengeführten Bilds;
Verifizieren, dass der Berührungseingabe-Randabschnitt in eine bestimmte Richtung gezogen wird; und
Verifizieren, dass eine Größe des gesamten Bildes angepasst wird, wenn der Randbereich in die bestimmte Richtung gezogen wird.

9. Verfahren nach Anspruch 1, ferner umfassend:
Verifizieren, dass eine Berührungseingabe eines bestimmten Bereichs des zusammengeführten und bearbeiteten Bilds zu einer eingestellten Zeit empfangen wird;
Erkennen, dass das zusammengeführte und das bearbeitete Bild in einer bestimmten Richtung bewegt wird;
Verbinden mit einem Anwendungssatz gemäß der Bewegungsrichtung zwischen mindestens zwei oder mehr Anwendungen; und
Hochladen des zusammengeführten und des bearbeiteten Bilds der verbundenen Anwendung.

10. Verfahren nach Anspruch 1, ferner umfassend:
Verifizieren, dass eine Berührungseingabe eines bestimmten Bereichs des zusammengeführten Bilds zu einer eingestellten Zeit empfangen wird;
Erkennen, dass das zusammengeführte Bild in einer eingestellten Richtung bewegt wird;
Unterteilen des zusammengeführten Bilds in Bilder, bevor es zusammengeführt wird; und
Verifizieren, dass die unterteilten Bilder zu Positionen verschoben werden, bevor sie zusammengeführt werden.

11. Verfahren nach Anspruch 1, ferner umfassend:
Verifizieren, dass eine Berührungseingabe eines bestimmten Bereichs des zusammengeführten und bearbeiteten Bilds zu einer eingestellten Zeit empfangen wird;
Anzeigen von Musterbildern von mindestens zwei oder mehr Anwendungen, die in der Lage sind, automatisch mit dem zusammengeführten und dem bearbeiteten Bild in einer eingestellten Richtung zusammenzuarbeiten;
Verifizieren, dass das zusammengeführte und das bearbeitete Bild in eine Richtung eines der angezeigten Musterbilder der mindestens zwei oder mehr Anwendungen gezogen werden;
Verbinden mit einem Anwendungssatz gemäß der gezogenen Richtung; und
Hochladen des zusammengeführten und des bearbeiteten Bilds mit dem verbundenen Anwendung.

12. Verfahren nach Anspruch 1, ferner umfassend:
Verifizieren, dass eine Berührungseingabe eines bestimmten Bereichs des zusammengeführten Bilds zu einer eingestellten Zeit empfangen wird;
Anzeigen eines Musterbilds, das in der Lage ist, das zusammengeführte Bild vor dem Zusammenführen in Bilder in einer eingestellten Richtung zu unterteilen;
Verifizieren, dass das zusammengeführte Bild in eine Richtung des angezeigten Musterbilds gezogen wird;
Unterteilen des zusammengeführten Bilds in Bilder, bevor es zusammengeführt wird; und
Verifizieren, dass die unterteilten Bilder zu Positionen verschoben werden, bevor sie zusammengeführt werden.

13. Verfahren nach Anspruch 1, ferner umfassend:
Verifizieren, dass eine Berührungseingabe eines bestimmten Bereichs eines bearbeiteten Bildes zu einer eingestellten Zeit empfangen wird;
Erkennen, dass das bearbeitete Bild in einer eingestellten Richtung bewegt wird;
Modifizieren des bearbeiteten Bilds in Bilder, bevor es bearbeitet wird;
Unterteilen der modifizierten Bilde, bevor sie vor dem Zusammenführen in Bilder bearbeitet werden; und
Verifizieren, dass die unterteilten Bilder vor dem Zusammenführen an Positionen verschoben werden.

14. Verfahren nach Anspruch 1, ferner umfassend:
Verifizieren, dass eine Berührungseingabe eines bestimmten Bereichs eines bearbeiteten Bilds zu einer eingestellten Zeit empfangen wird;
Anzeigen eines Musterbilds, das das bearbeitete Bild, bevor es bearbeitet wird, in Bilder unterteilen kann, in einer eingestellten Richtung;
Verifizieren, dass das bearbeitete Bild in eine Richtung des angezeigten Musterbilds gezogen wird;
Unterteilen des bearbeiteten Bilds in Bilder, bevor es bearbeitet wird; und
Verifizieren, dass die unterteilten Bilder, bevor sie zusammengeführt werden, an Positionen verschoben werden.

15. Elektronische Vorrichtung, umfassend einen Speicher und einen Prozessor, der mit dem Speicher gekoppelt und konfiguriert ist, um das Verfahren von nach einem der Ansprüche 1 bis 14 durchzuführen.

## Revendications

1. Procédé de fonctionnement d'un dispositif électronique, le procédé comprenant :
la détection qu'au moins deux images d'entrée de toucher sont simultanément glissées vers une région réglée et que les images sont situées au plus à une distance réglée de la région ; et
la fusion des images lorsqu'elles sont situées au plus à la distance réglée.

2. Procédé selon la revendication 1, dans lequel la détection que les au moins deux images d'entrée de toucher sont glissées vers la région réglée comprend l'exécution d'une opération de commande, de sorte que la séparation des au moins deux images d'entrée de toucher par une luminosité réglée augmente au fur et à mesure qu'elles sont glissées vers la région réglée, et la transparence des images d'entrée de toucher par une luminosité réglée augmente au fur et à mesure qu'elles sont rapprochées d'une distance réglée.

3. Procédé selon la revendication 1, comprenant en outre :
la vérification qu'une entrée de toucher des au moins deux images d'entrée de toucher est terminée ; et
la vérification que les images glissées vers la région réglée sont déplacées vers les positions d'entrée de toucher.

4. Procédé selon la revendication 1, comprenant en outre :
la réception d'une entrée de toucher d'une portion de fin de l'une quelconque de lignes de division parmi les images partitionnées dans l'image fusionnée ;
la vérification que la portion de fin d'entrée de toucher de la ligne de division est glissée dans un certain sens ; et
la vérification que la ligne de division d'entrée de toucher est déplacée au fur et à mesure que la portion de fin de la ligne de division est glissée dans le certain sens.

5. Procédé selon la revendication 1, comprenant en outre :
la réception d'une entrée de toucher de l'une quelconque de lignes de division parmi des images partitionnés dans l'image fusionnée ;
la vérification que la région d'entrée de toucher est tournée dans un certain sens ; et
la vérification que la ligne de division est déplacée dans un sens dans lequel la région d'entrée de toucher est tournée.

6. Procédé selon la revendication 1, comprenant en outre :
la réception d'une entrée de toucher d'un point d'intersection de lignes de division parmi des images partitionnés dans des images lorsqu'au moins trois images sont fusionnées ;
la vérification que le point d'intersection d'entrée de toucher est glissé dans un certain sens ; et
la vérification que toutes les lignes de division parmi les images sont déplacées au fur et à mesure que le point d'intersection est glissé dans le certain sens.

7. Procédé selon la revendication 1, comprenant en outre :
la réception d'une entrée de toucher de chacune de certaines régions d'au moins deux images partitionnées dans l'image fusionnée ;
la vérification que les images sont tournées dans le sens des aiguilles d'une montre ou dans le sens inverse des aiguilles d'une montre dans un état dans lequel l'entrée de toucher de chacune des certaines régions parmi les au moins deux images est reçue ; et
la vérification que l'intégralité des au moins deux images sont déplacées dans le sens de rotation.

8. Procédé selon la revendication 1, comprenant en outre :
la réception d'une entrée de toucher d'une certaine portion sur un bord de l'image fusionnée ;
la vérification que la portion de bord d'entrée de toucher est glissée dans un certain sens ; et
la vérification qu'une taille de l'image complète est ajustée au fur et à mesure du glissement de la portion de bord dans le certain sens.

9. Procédé selon la revendication 1, comprenant en outre :
la vérification qu'une entrée de toucher d'une certaine région de l'image fusionnée et éditée est reçue à un temps réglé ;
la détection que l'image fusionnée et éditée est effleurée dans un certain sens ;
la connexion à une application réglée en fonction du sens d'effleurement parmi au moins deux applications ; et
le chargement de l'image fusionnée et éditée en utilisant l'application connectée.

10. Procédé selon la revendication 1, comprenant en outre :
la vérification qu'une entrée de toucher d'une certaine région de l'image fusionnée est reçue à un temps réglé ;
la détection que l'image fusionnée est effleurée dans un sens réglé ;
la division de l'image fusionnée en images avant d'être fusionnée ; et
la vérification que les images divisées sont déplacées vers des positions avant d'être fusionnées.

11. Procédé selon la revendication 1, comprenant en outre :
la vérification qu'une entrée de toucher d'une certaine région de l'image fusionnée et éditée est reçue à un temps réglé ;
l'affichage d'images de guide d'au moins deux applications, capables d'interfonctionner automatiquement avec l'image fusionnée et éditée, dans un sens réglé ;
la vérification que l'image fusionnée et éditée est glissée dans un sens de l'une quelconque des images de guide affichées des au moins deux applications ;
la connexion à une application réglée en fonction du sens de glissement ; et
le chargement de l'image fusionnée et éditée en utilisant l'application connectée.

12. Procédé selon la revendication 1, comprenant en outre :
la vérification qu'une entrée de toucher d'une certaine région de l'image fusionnée est reçue à un temps réglé ;
l'affichage d'une image de guide, capable de diviser l'image fusionnée en images avant d'être fusionnée, dans un sens réglé ;
la vérification que l'image fusionnée est glissée dans un sens de l'image de guide affichée ;
la division de l'image fusionnée en images avant d'être fusionnée ; et
la vérification que les images divisées sont déplacées à des positions avant d'être fusionnées.

13. Procédé selon la revendication 1, comprenant en outre :
la vérification qu'une entrée de toucher d'une certaine région d'une image éditée est reçue à un temps réglé ;
la détection que l'image éditée est effleurée dans un sens réglé ;
la modification de l'image éditée en images avant d'être éditée ;
la division des images modifiées avant d'être éditées en images avant d'être fusionnées ; et
la vérification que les images divisées sont déplacées à des positions avant d'être fusionnées.

14. Procédé selon la revendication 1, comprenant en outre :
la vérification qu'une entrée de toucher d'une certaine région d'une image éditée est reçue à un temps réglé ;
l'affichage d'une image de guide, capable de diviser l'image éditée en images avant d'être éditée, dans un sens réglé ;
la vérification que l'image éditée est glissée dans un sens de l'image de guide affichée ;
la division de l'image éditée en images avant d'être éditée ; et
la vérification que les images divisées sont déplacées à des positions avant d'être fusionnées.

15. Dispositif électronique comprenant une mémoire et un processeur couplé à la mémoire et configuré pour effectuer le procédé selon l'une quelconque des revendications 1 à 14.
